# EUROPÄISCHE PATENTSCHRIFT

(11) **EP 0 945 245 B1**
(45) Veröffentlichungstag und Bekanntmachung des Hinweises auf die Patenterteilung: **11.12.2002**
(21) Anmeldenummer: 99105726.6
(22) Anmeldetag: 20.03.1999
(51) Int. Cl.: B29C 47/92, B29C 47/22

(54) **Verfahren zum Extrusionsblasverfahren von Hohlkörpern**
Method of extrusion blow moulding hollow containers
Procédé de moulage de corps creux par extrusion soufflage

(30) Priorität: 27.03.1998 DE 19813863; 24.04.1998 DE 19818519
(43) Veröffentlichungstag der Anmeldung: 29.09.1999
(73) Patentinhaber: Feuerherm, Harald, D-53840 Troisdorf (DE)
(72) Erfinder: Feuerherm, Harald, 53840 Troisdorf (DE); Kappen-Feuerherm, Rolf, 53840 Troisdorf (DE)
(74) Vertreter: Albrecht, Rainer Harald, Dr.-Ing.

(56) Entgegenhaltungen:
- EP-A- 0 058 297
- EP-A- 0 709 177
- EP-A- 0 885 711
- VOLKER VOELZ & HARALD FEUERHERM: "Produktionssichere Hohlkörperfertigung durch optimale Vorformlingsgestaltung" KUNSTSTOFFBERATER, Bd. 28, Nr. 1/2, Februar 1983, Seiten 17-22, XP002107838 FRANKFURT/MAIN, DE
- PATENT ABSTRACTS OF JAPAN vol. 010, no. 385 (M-548), 24. Dezember 1986 & JP 61 175008 A (ISHIKAWAJIMA HARIMA HEAVY IND CO LTD), 6. August 1986

## Beschreibung

Die Erfindung betrifft ein Verfahren zum Extrusionsblasformen von Hohlkörpern, insbesondere zur Herstellung von Hohlkörpern mit einem von der Kreisform abweichendem Querschnitt bei dem ein schlauchförmiger Vorformling mit einer Profilierung aus dem von einem Dorn und einem Düsenring begrenzten Düsenspalt eines Strangpreßkopfes austritt, dessen Düsenspaltbreite und dessen Düsenspaltgeometrie nach Maßgabe eines Wanddickenprogramms und/oder in Abhängigkeit der aus dem Düsenspalt austretenden Schlauchlänge geregelt wird, und bei dem der extrudierte Vorformling anschließend in einer Blasform zu einem Hohlkörper aufgeweitet wird,
wobei nach Maßgabe einer ersten Programmkurve (WDS) des Wanddickenprogramms eine axiale Stellbewegung des Dorns und/oder des Düsenrings geregelt und dadurch die Düsenspaltbreite über den gesamten Umfang verändert wird und
wobei nach Maßnahme einer zweiten Programmkurve (RWDS) des Wanddickenprogramms eine Stelleinrichtung geregelt wird, welche die Düsenspaltgeometrie verändert.

Das Verfahren wird insbesondere eingesetzt zur Herstellung von Kanistern, Containern, Kunststoffkraftstoffbehältern für Fahrzeuge und ähnlichen Behältern, die eine von der Zylinderform abweichende Geometrie aufweisen.

Bei der Produktion eines Hohlkörpers im Extrusionsblasformverfahren ergibt sich bei einem zylindrischen Blaskörper eine Durchhängung des Vorformlings aufgrund des Eigengewichtes. Die Durchhängung des Vorformlings ist unter anderem eine Funktion des Gewichtes des Vorformlings, der Viskosität bzw. Steifigkeit des plastifizierten Kunststoffmaterials bei der momentanen Vorformlingstemperatur, der Zeit des freihängenden Vorformlings bis zur Einformung des Vorformlings durch die Blasform und äußert sich durch eine Veränderung des Vorformlingsdurchmessers und zumindest im oberen Bereich durch eine Reduzierung der Vorformlingswanddicke. Die beschriebenen Effekte werden durch eine Vergrößerung des Düsenspaltes in Abhängigkeit der extrudierten Schlauchlänge kompensiert. Die Regelung der Düsenspaltbreite erfolgt durch eine erste Programmkurve - auch als Wanddickensteuerung WDS bezeichnet -, welche axiale Stellbewegungen des Dorns oder des Düsenrings regelt und dadurch die Düsenspaltbreite über den gesamten Umfang verändert. Jede Regelung, die sich bei jedem Maschinenzyklus wiederholt, wird im folgenden auch als dynamische Regelung bezeichnet.

In Kombination mit der beschriebenen dynamischen Wanddickensteuerung folgt eine ebenfalls dynamische, sich also bei jedem Maschinenzyklus wiederholende, Regelung der Düsenspaltgeometrie nach Maßgabe einer zweiten Programmkurve - die auch als radiale Wanddickensteuerung RWDS bezeichnet wird. Die zweite Programmkurve läuft synchron mit der axialen Wanddickensteuerung in Schlauchlängsrichtung ab und regelt eine . Stelleinrichtung, welche die Düsenspaltgeometrie verändert. Für die konstruktive Umsetzung sind zahlreiche Möglichkeiten bekannt. Vorteilhaft ist eine dynamische Regelung der Düsenspaltgeometrie durch Verstellung einer den Düsenspalt innenseitig oder außenseitig begrenzenden deformierbaren Hülse, die nach Maßgabe der Programmkurve verformt wird. Ferner können axial und radial verstellbare Schieber eingesetzt werden, die nach Maßgabe der RWDS-Programmkurve in den Schmelzekanal innerhalb des Blaskopfes oder am Düsenende eingeschoben werden. Die dynamische Regelung der Düsenspaltgeometrie wird bei der Extrusionsblasformung von Behältern insbesondere eingesetzt, um z. B. bei Kanistern und Containern die Materialverteilung im Hinblick auf die Vorformung des Hohlkörperbodens und/oder Hohlkörperdeckels zu verändern. Durch die dynamische Wanddickensteuerung RWDS werden Dickstellen und/oder Dünnstellen während des Vorformlingaustritts aus dem Düsenspalt in Abhängigkeit des axialen Wanddickenprofils (WDS)und/oder der Schlauchlänge erzeugt und/oder in Umfangsrichtung des Vorformlings verschoben. Ein Verfahren, bei dem die beschriebenen Regelungen in Kombination eingesetzt werden, ist aus Plastverarbeiter 32 (1981) Nr. 3, Seiten 326 bis 330 und Kunststoffberater Vol. 28 (1983) Nummer 1/2, Seiten 17 bis 22 bekannt.

Bei der Extrusionsblasformung von nichtzylindrischen Hohlkörpern, z. B. Behältern mit rechteckigem Querschnitt, Kunststoffkraftstoffbehältern für Fahrzeuge und dergleichen, werden Vorformlinge extrudiert, die Dickstellen und/oder Dünnstellen aufweisen, welche sich an vorgegebenen Umfangsabschnitten über die gesamte oder einen Teil der Länge des Vorformlings erstrecken. Im Rahmen der bekannten Maßnahmen wird die Düsenspaltgeometrie zu diesem Zweck manuell in geeigneter Weise eingestellt. Die Einstellung erfolgt z. B. durch Stellschrauben, die auf eine deformierbare Hülse wirken. Die aus dem Stand der Technik bekannte Einstellung der Düsenspaltgeometrie in Verbindung mit einer axialen Stellbewegung des Dorns und/oder des Düsenrings zur Beeinflussung der Düsenspaltbreite reicht allerdings nicht aus, um Hohlkörper mit gleichmäßiger Wandstärke herzustellen, wenn die Hohlkörper einen deutlich vom kreisförmigen Querschnitt abweichenden Querschnitt aufweisen.

Der Erfindung liegt die Aufgabe zugrunde, ein Verfahren zum Extrusionsblasformen anzugeben, mit dem Hohlkörper, die einen von der Kreisform abweichenden Querschnitt aufweisen, mit einer vorgegebenen Wandstärke gefertigt werden können. Insbesondere sollen rechteckförmige Kanister, Container, kompliziert geformten Kunststoffkraftstoffbehälter und dergleichen den Vorgaben entsprechend gefertigt werden können, deren Kantenbereiche, die auch als Säulen oder Wülste ausgebildet sein können, über die Hohlkörperlänge mit gewünschter Wandstärke gefertigt sind.

Ausgehend von einem Verfahren mit den eingangs beschriebenen Merkmalen, wird die Aufgabe erfindungsgemäß dadurch gelöst,
daß die Düsenspaltgeometrie zusätzlich durch ein mechanisch eingearbeitetes Profil oder durch eine dritte, unabhängig von der Regelung der Düsenspaltgeometrie nach der zweiten Programmkurve (RWDS) vorgenommene Einstellung (HP) oder Steuerung einer den Schmelzefluß beeinflussenden Stelleinrichtung verändert wird, und zwar so,
daß die Profilierung des Vorformlings verstärkt wird, wenn der Düsenspalt breiter ist als ein Referenzwert, und
daß die Profilierung des Vorformlings abgeschwächt wird, wenn der Düsenspalt schmaler ist als der Referenzwert.

Verstärkung der Profilierung meint, daß die Wandstärkendifferenz zwischen den Dickstellen und den Dünnstellen vergrößert wird. Entsprechend wird die Differenz zwischen den an den Dickstellen und benachbarten Dünnstellen gemessenen Wandstärken des Vorformlings kleiner, wenn die Profilierung abgeschwächt wird. Die Erfindung beruht auf der Überlegung, daß die Wirkung eines Profils des Düsenspaltes abhängig ist von der durch die Wanddickensteuerung eingestellten Düsenspaltbreite. Ist die Düsenspaltbreite groß, wirkt sich ein konstant vorgegebenes Profil des Düsenspaltes auf das Blasformergebnis weniger aus als in einem Düsenspalt kleiner Breite. Dadurch, daß das Profil an die Düsenspaltbreite angepaßt wird, ist eine beachtliche Vergleichmäßigung der Wanddicke bei der in der Blasform auftretenden Verreckung des Kunststoffmaterials möglich, und es können auch bei einem Behälter, der konstruktionsbedingte dünnwandige und/oder dickwandige Abschnitte aufweist, die Wandstärken den Vorgaben entsprechend annähernd eingehalten werden. Die Vorteile der erfindungsgemäßen Lehre kommen insbesondere dann zum Tragen, wenn die Durchhängung des Vorformlings aufgrund des Kunststoffmaterials, der Temperatur und dergleichen eine starke Steigung der axialen Wanddickenprofilkurve, also der ersten Programmkurve WDS, erfordert. Sie ist vorteilhaft insbesondere bei der kontinuierlichen Extrusion und/oder bei der Verwendung leichtfließenden Kunststoffmaterials.

Gemäß einer bevorzugten Ausführung der Erfindung wird das auf den Schmelzestrom einwirkende Profil in Abhängigkeit einer auf die erste Programmkurve (WDS) abgestimmten weiteren Programmkurve des Wanddickenprogramms, die auch als hubabhängige Programmkurve (HP) bezeichnet wird, und/oder in Abhängigkeit der aus dem Düsenspalt austretenden Schlauchlänge so geregelt, daß das Verhältnis der Dick- und Dünnstellen während des Ablaufs der Programmkurve unabhängig von der durch die erste Programmkurve (WDS) vorgegebenen Düsenspaltbreite den Vorgaben entsprechend annähernd konstant bleibt. Als Programmkurve HP kann eine Funktion eingesetzt werden, deren Verlauf sich aus einer Multiplikation der Funktionswerte der ersten Programmkurve mit einem im Bereich F < 1 festgelegten Wert F ergibt. Der Wert F wird im folgenden auch als Profilfaktor bezeichnet und ist regelmäßig wesentlich kleiner als der Wert 1, so daß eine beachtliche Stauchung der Programmkurve WDS erfolgt.

Das erfindungsgemäße Verfahren kann ferner bei der Fertigung komplizierter Hohlkörpergeometrien genutzt werden, um den Schlauchlauf zu verbessern und/oder um Störungen am Schlauchanfang oder Schlauchende zu beseitigen. Bei einem stark profilierten Düsenspalt ist ein vollständiges Schließen des Düsenspaltes am Anfang bzw. am Ende der Schlauchextrusion bzw. während der Befüllung des Kopfspeichers nicht möglich. Es verbleiben offene Bereiche des Düsenspaltes, aus dem Kunststoffmaterial auslaufen kann.

Das Auslaufen bzw. Vorlaufen an stark profilierten geöffneten Stellen des Düsenspaltes kann so stark werden, daß der Vorformling nicht mehr über den Blasdorn läuft und somit bei Formschluß kein brauchbarer Hohlkörper hergestellt werden kann. Extreme Dick- und Dünnstellen, die sich über die gesamte Schlauchlänge einschließlich der den Butzen zugeordneten Bereichen erstrecken, bewirken aufgrund des rheologischen Verhaltens der Kunststoffschmelze einen Schieflauf. All diese beschriebenen, für den Betrieb der Blasformanlage negativen Effekte können beseitigt werden, wenn gemäß einer bevorzugten Ausführung der Erfindung die Profileinstellung des Dorns und/oder des Düsenrings bei vorgegebenen Werten des ablaufenden Wanddickenprogramms und/oder in Abhängigkeit der aus dem Düsenspalt austretenden Schlauchlänge zugeschaltet und/oder abgeschaltet wird.

Weitere Ausgestaltungen des erfindungsgemäßen Verfahrens sind in den Ansprüchen 5 bis 15 angegeben.

Bei den Ausgestaltungen der Ansprüche 5 bis 9 ist jeweils eine stellbewegliche Zusatzeinrichtung zur Verstärkung der Profilierung des aus dem Düsenspalt austretenden schlauchförmigen Vorformlings vorgesehen. Die Zusatzeinrichtung kann manuell oder durch eine Fernbetätigung eingestellt werden. Vorzugsweise ist sie an die Programmsteuerung angeschlossen und führt programmgesteuerte Stellbewegungen während der Extrusion eines Vorformlings aus. Die von der zweiten Programmkurve (RWDS) gesteuerte Stelleinrichtung und die Zusatzeinrichtung sind in Schmelzefließrichtung zweckmäßig hintereinander angeordnet.

Bei der in Anspruch 10 angegebenen Ausgestaltung des erfindungsgemäßen Verfahrens ist eine an die Programmsteuerung angeschlossene, stellbewegliche Zusatzeinrichtung nicht erforderlich. Erfindungsgemäß ist bei der Ausführungsform des Anspruches 10 an der düsenaustrittsseitigen Stirnfläche des Dorns oder eines Teils des Dorns und/oder des Düsenrings oder eines Teils des Düsenrings ein auf den Schmelzefluß einwirkendes Profil vorgesehen, welches so ausgebildet ist, daß mit einer nach der ersten Programmkurve (WDS) gesteuerten axialen Stellbewegung des Dorns oder des Düsenrings das Verhältnis der Dick- und Dünnstellen im Schmelzefluß beeinflußbar ist.

Gemäß einer weiteren Ausführung der erfindungsgemäßen Lehre weist eine kegelförmige Mantelfläche des Dorns und/oder des Düsenrings ein den Schmelzefluß formendes wellenförmiges Querschnittsprofil auf. Die mit einem wellenförmigen Querschnittsprofil ausgebildete Mantelfläche kann im Schmelzekanal oberhalb des Düsenspaltes angeordnet sein. Gemäß einer bevorzugten Ausführung der Erfindung begrenzt die mit einem wellenförmigen Querschnittsprofil ausgebildete Mantelfläche den Düsenspalt, wobei die Profiltiefe des wellenförmigen Profils in Schmelzefließrichtung zum Düsenaustritt abnimmt. Mit einer die Düsenspaltbreite vergrößernden Ausschubbewegung des Dorns und/oder des Düsenrings wird zugleich das Profil des Düsenspaltes verstärkt und mit einer die Düsenspaltbreite reduzierenden Einziehbewegung des Dorns oder des Düsenrings wird das Profil des Düsenspaltes abgeschwächt. Das auf den Schmelzestrom einwirkende Profil, welches in die kegelförmige Mantelfläche des Dorns und/oder des Düsenrings eingearbeitet ist, ist mit dem Stellhub der Stellbewegung WDS so abgestimmt, daß das Verhältnis der Dick- und Dünnstellen während des Ablaufs der Programmkurve unabhängig von der durch die Programmkurve WDS vorgegebenen Düsenspaltbreite annähernd konstant bleibt. Die Wand des Schmelzekanals kann in Fließrichtung vor der kegelförmigen Mantelfläche Einlaufvertiefungen aufweisen, welche den Schmelzefluß zu den Vertiefungen des in die kegelförmige Wandfläche eingearbeiteten Profils begünstigt. Im Rahmen der Erfindung liegt es ferner, daß der Dorn und/oder der Düsenring mit einer elastischen Hülse ausgerüstet ist, die zum Düsenaustritt einen kegelförmigen Abschnitt aufweist und durch radial angeordnete Stellelemente deformierbar ist. Die kegelförmige Mantelfläche der Hülse ist mit einem den Schmelzefluß formenden, wellenförmigen Querschnittsprofil versehen, wobei die Profiltiefe des in die Hülse eingearbeiteten Profils in Schmelzefließrichtung zum Düsenaustritt abnimmt. Auch bei dieser Ausführung wird mit einer die Düsenspaltbreite vergrößernden Ausschubbewegung des mit der Hülse versehenden Dorns oder des mit der Hülse versehenden Düsenrings zugleich das Profil des Düsenspaltes verstärkt und mit einer die Düsenspaltbreite reduzierenden Einziehbewegung des Dorns oder des Düsenrings wird das Profil des Düsenspaltes abgeschwächt. Arbeitet man mit einer elastisch verformbaren Hülse, so empfiehlt die Erfindung, daß die Hülse in dem Bereich, in dem das Profil stark ausgebildet ist, eine größere Wandstärke besitzt als an dem düsenaustrittsseitigen Ende. Eine partielle Verstärkung der Wandstärke der deformierbaren Hülse in dem Bereich starker Profilierung ist zweckmäßig, da die elastische Hülse durch radial wirkende Stellelemente einer beachtlichen Biegebeanspruchung unterliegt und die Hülse durch das in Umfangsrichtung wellenförmig eingearbeitete Profil partiell geschwächt ist.

In weiterer Ausgestaltung der vorstehend beschriebenen Ausführungen lehrt die Erfindung, daß die Profiltiefe in Fließrichtung zum Düsenaustritt soweit abnimmt, daß der Dorn, der Düsenring oder die auf dem Dorn oder dem Düsenring angeordnete Hülse im deformationsfreien Zustand zumindest annähernd rotationssymmetrisch sind und daß der Düsenspalt durch eine Schließbewegung, auch als Einziehbewegung bezeichnet, in eine vorgegebene Endposition geschlossen wird. Bei dieser Ausführung ist ein Betrieb mit stark profiliertem Düsenspalt möglich, der am Anfang bzw. am Ende der Schlauchextrusion bzw. während der Befüllung des Kopfspeichers annähernd vollständig geschlossen werden kann.

Unter die Lehre der Erfindung fallen eine Vielzahl von Ausführungen, die vorstehend erläutert und im folgenden anhand von Ausführungsbeispielen ausführlich beschrieben werden. Das Verfahren nach den Ansprüchen 10 und 11 unter Verwendung eines Dorns, dessen kegelförmige Mantelfläche ein vorgegebenes wellenförmiges Querschnittsprofil mit einer in Schmelzefließrichtung abnehmenden Profiltiefe aufweist, ist eine bevorzugte Ausführung zur Herstellung von Behältern mit im wesentlichen rechteckigen Querschnitten, z. B. Kanistern und Containern. Die Position der Dick- und Dünnstellen am schlauchförmigen Vorformling sind im vorhinein ziemlich genau festlegbar. Das Verfahren ermöglicht eine kostengünstige Fertigung von Blaskörpern mit verbesserten Eigenschaften.

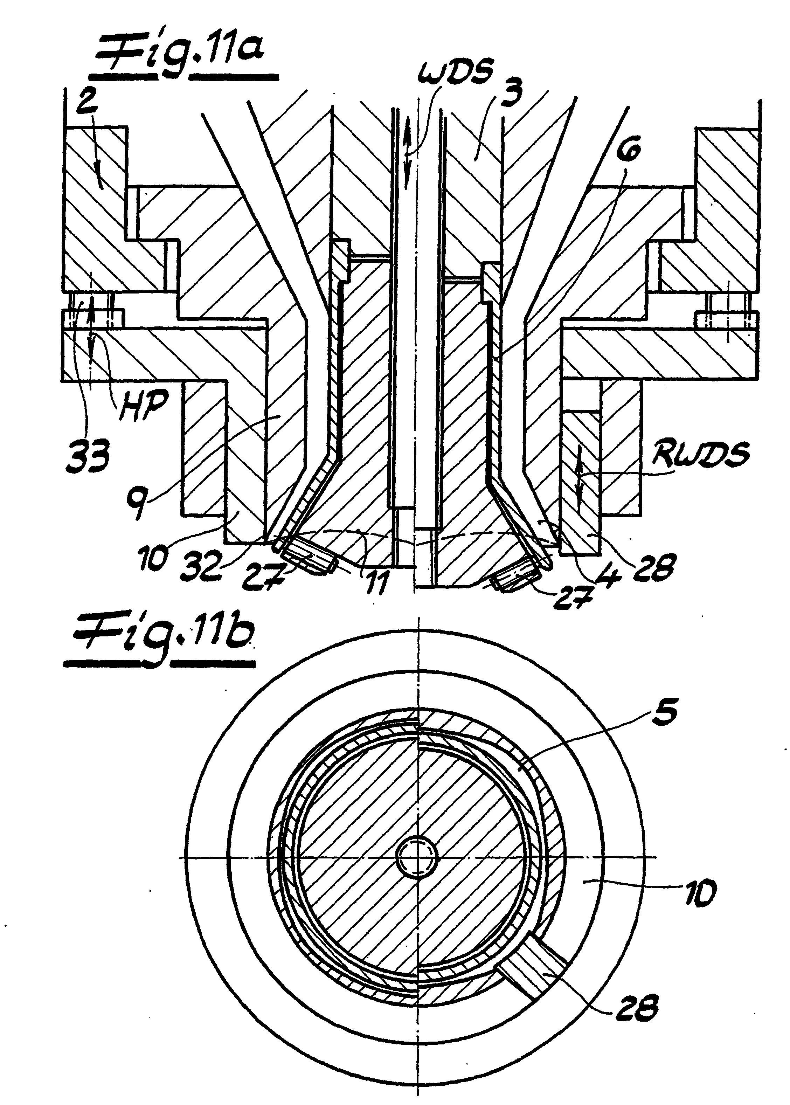

Bei Kunststoffkraftstoffbehältern ist die Bestimmung der richtigen Position der Dick- und Dünnstellen vom Schlauch zum aufgeblasenen Behälter durch die im vorhinein quantitativ nicht bestimmbare Verreckung sehr schwer. Das Verfahren nach Anspruch 13 ermöglicht eine kostengünstige Fertigung kompliziert geformter Blaskörper mit vorgegebener Wandstärkeverteilung und stellt insofern für die Herstellung von Kunststoffkraftstoffbehältern eine bevorzugte Ausführungsform dar. Werden noch höhere Anforderungen gestellt, bietet sich die Durchführung des Verfahren mit einer Vorrichtung an, bei der eine einstellbare, vertikal verschiebbare Profilhülse, wie z. B. in Fig. 11 beschrieben, eingesetzt wird. Für höchste Anforderungen kommt das Verfahren gemäß Anspruch 2 in Betracht.

Im folgenden wird die Erfindung anhand einer lediglich ein Ausführungsbeispiel darstellenden Zeichnungen erläutert. Es zeigen in schematischer Darstellung
- Fig. 1: einen Längsschnitt durch einen Blaskopf, der zum Extrusionsblasformen von Hohlkörpern, insbesondere Rechteckkanistern, Containern und Kunststoffkraftstoffbehältern, eingesetzt wird,
- Fig. 2: eine erfindungsgemäß einstellbare Düsenspaltgeometrie am Düsenaustritt
- Fig. 3: daß in Abhängigkeit der Hohlkörpergeometrie dargestellte Wanddickenprogramm mit Programmkurven zur Steuerung der Düsenspaltbreite und der Düsenspaltgeometrie,
- Fig. 4a-d: in einer vergleichenden Darstellung die Düsenspaltgeometrie nach dem Stand der Technik und nach der erfindungsgemäßen Lehre an vorgegebenen Wandpunkten aus dem Wanddickenprogramm nach Fig. 3
- Fig. 5a/b-14a/b: Düsenanordnungen zur Durchführung des erfindungsgemäßen Verfahrens.

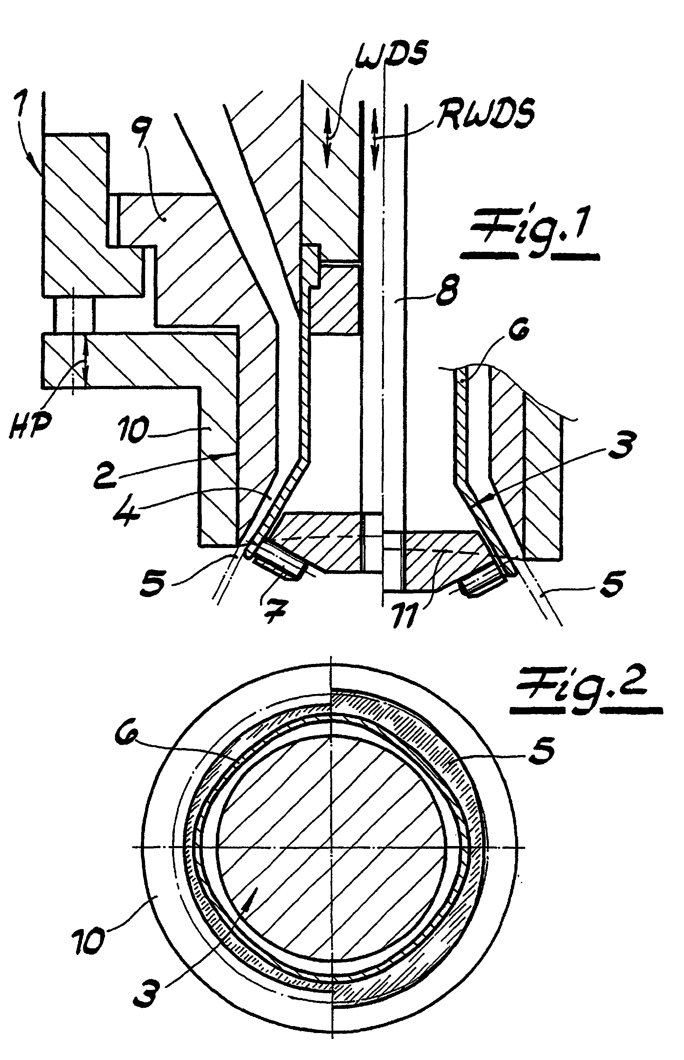

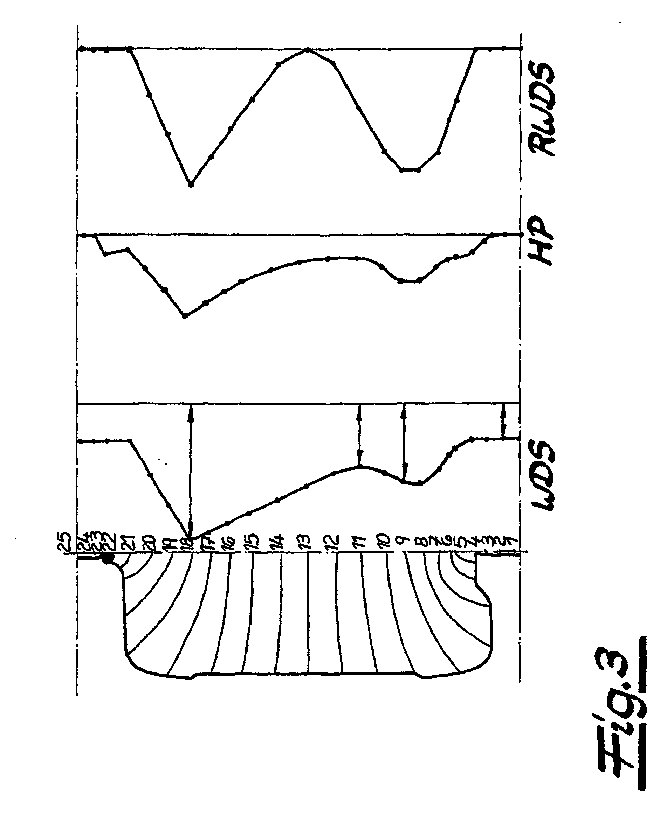

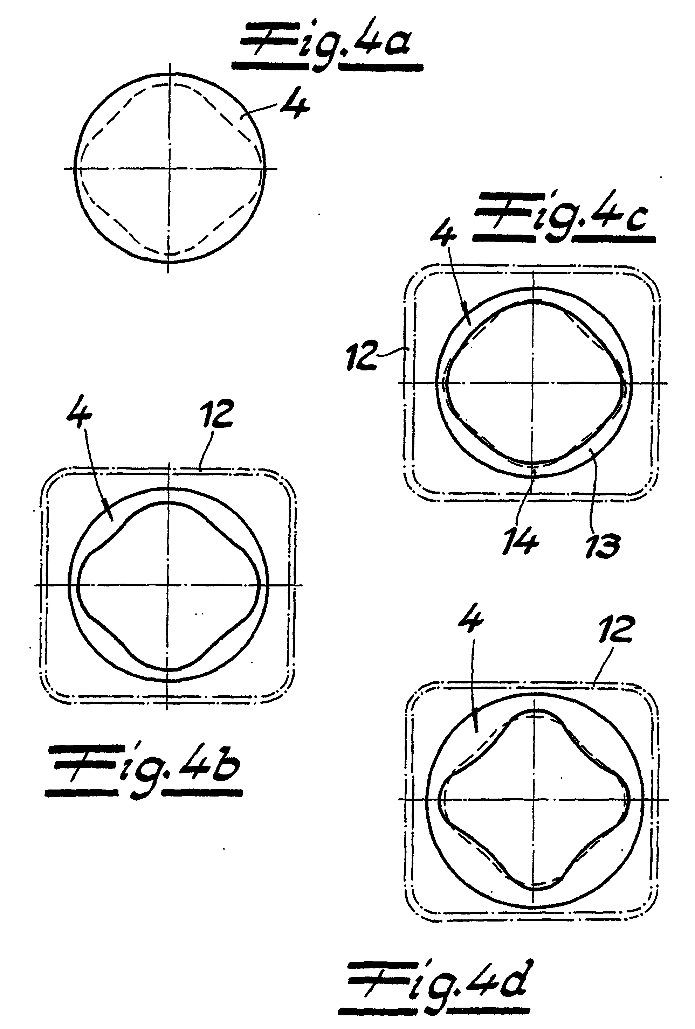

Der in Fig. 1 im Längsschnitt dargestellte Extrusionskopf ist für eine Anlage zum Extrusionsblasformen von Hohlkörpern, z. B. Kanistern, Containern und Kunststoffkraftstoffbehältern, bestimmt. Er weist ein Düsengehäuse 1 mit einem Düsenring 2 sowie einen axial verstellbaren Dorn 3 auf. Dorn 3 und Düsenring 2 begrenzen einen Düsenspalt 4, aus dem ein schlauchförmiger Vorformling 5 extrudiert wird. Der Dorn 3 ist mit einer elastisch verformbaren Hülse 6 ausgerüstet. Auf die Hülse 6 wirken im wesentlichen radiale Stellelemente 7. Durch Verformung der Hülse 6 ist die Düsenspaltgeometrie über den Umfang veränderbar. Im Schmelzefluß stellen sich Dick- und Dünnstellen ein, deren Verhältnis durch Betätigung der Stellelemente 7 verändert wird. Zur Betätigung der Stellelemente 7 ist eine Stellstange 8 vorgesehen. Wird sie aufwärts bewegt, so werden die Ausbauchungen an von den Stellelementen 7 beaufschlagten Abschnitten der Hülse 6 größer, gleichzeitig entstehen stärkere Einbuchtungen, da der Umfang der Hülse 6 konstant bleibt. Der Düsenring 2 besteht bei der in Fig. 1 dargestellten Ausführung des Extrusionskopfes aus einem maschinenfest angeordneten Ring 9 und einer axial verstellbaren Profilhülse 10 deren Stirnfläche ein auf den Schmelzefluß einwirkendes wellenförmiges Profil 11 aufweist. Auch die Stirnfläche des maschinenfesten Ringes 9 kann mit einem wellenförmigen Profil versehen sein. Wird die Profilhülse 10 z. B. bis zum Anschlag an den maschinenfesten Ring 9 zurückbewegt, so wirkt lediglich der maschinenfeste Ring 9 auf den Schmelzestrom ein, und die Profilhülse 10 ist ohne Wirkung (linke Darstellung in der Fig. 1). Wird sie über den äußeren Rand des maschinenfesten Rings 9 vorgeschoben, greifen nach Maßgabe des wellenförmigen Profils Abschnitte der Profilhülse 10 nach Maßgabe der Stellung sowie der Kontur des wellenförmigen Profils 11 mehr oder weniger stark in den Schmelzestrom ein und erzeugen Dick- und/oder Dünnstellen im Vorformling 5.

Beim Extrusionsblasformen werden schlauchförmige Vorformlinge 5 aus dem Düsenspalt 4 des Strangpreßkopfes extrudiert und anschließend in einer Blasform zu Hohlkörpern aufgeweitet. Die Düsenspaltbreite sowie die Düsenspaltgeometrie werden nach Maßgabe eines Wanddickenprogramms und/oder in Abhängigkeit der aus dem Düsenspalt 4 austretenden Schlauchlänge geregelt. Die Regelung erfolgt nach Programmkurven eines Wanddickenprogramms. Der Ablauf ist in Fig. 3 schematisch dargestellt. Nach Maßgabe einer ersten Programmkurve (WDS) des Wanddickenprogramms wird eine in Fig. 1 ebenfalls mit WDS gekennzeichnete axiale Stellbewegung des Dorns 3 geregelt und dadurch die Düsenspaltbreite über den gesamten Umfang variiert. Bei anderen Ausführungen des Extrusionsblaskopfes ist auch eine axiale Stellbewegung WDS des Düsenrings 2 möglich, um die Düsenspaltbreite über den gesamten Umfang zu beeinflussen. Nach Maßgabe einer zweiten Programmkurve (RWDS) des Wanddickenprogramms wird eine Stelleinrichtung geregelt, welche die Düsenspaltgeometrie verändert. Bei der in Fig. 1 dargestellten Ausführung des Extrusionskopfes erfolgt eine Stellbewegung RWDS der im Dorn 3 geführten Stellstange 8, die über Stellelemente 7 die Hülse 6 verformt. Viele andere konstruktive Ausgestaltungen sind möglich, um die Düsenspaltgeometrie dynamisch nach Maßgabe der zweiten Programmkurve RWDS zu beeinflussen. Bei der in Fig. 1 dargestellten Ausführung des Extrusionskopfes weist der Düsenring 2 ein endseitiges Profil 11 auf, welches Dickstellen und Dünnstellen im Schmelzestrom erzeugt. Das auf den Schmelzestrom einwirkende Profil, im Ausführungsbeispiel der Fig. 1 die wellenförmig profilierte Abschlußkante 11 des Düsenrings 2, ist unabhängig von der zuvor beschriebenen Regelung des Düsenspaltes entsprechend dem Richtungspfeil HP veränderbar, wobei die Profilierung des Schmelzestroms verstärkt wird, wenn der Düsenspalt breiter ist als ein Referenzwert, und wobei die Profilierung des Schmelzestroms abgeschwächt wird, wenn der Düsenspalt schmaler ist als der Referenzwert.

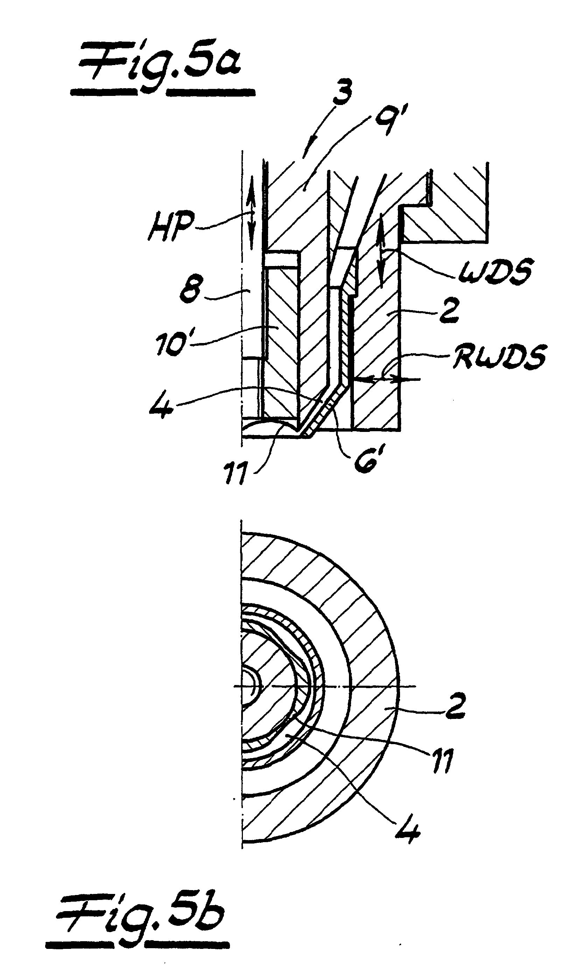

Im Rahmen der Erfindung liegt es auch, daß die Profilhülse 10 des Düsenrings 2 dynamische Stellbewegungen RWDS nach Maßgabe der Programmkurve (RWDS) ausführt und mit der Stellstange 8 Stellbewegungen (HP) ausgeführt werden, um die Profilierung des Schmelzestroms nach Maßgabe des Düsenspaltes, z. B. in Abhängigkeit der Hubbewegung des Dorns 3, zu verstärken oder abzuschwächen. Mit den beschriebenen Einrichtungen ist z. B. der in Fig. 2 dargestellte Düsenspalt einstellbar. Eine dynamische Regelung der Stellbewegung der Profilhülse 10 ist nicht zwingend. Es kann beispielsweise auch eine Einstellung über Stellspindeln erfolgen, wie dies noch anhand der Fig. 11a erläutert wird. Für die hubabhängige Profilierung HP richtet sich die Anzahl der bogenförmigen Linien des Profils 11 nach der Anzahl der zu beeinflussenden Ecken des zu fertigenden Hohlkörpers. Die Wirkung des erfindungsgemäßen Verfahrens wird anhand der Fig. 4a bis d verständlich. In der Fig. 4 sind Querschnitte durch den Düsenspalt 4 gezeigt, und zwar für die in Fig. 3 eingezeichneten Wanddickenpunkte WDP2 (Fig.4a), WDP8 und WDP9 (Fig. 4b), WDP11 (Fig. 4c) und WDP18 (Fig. 4d). In durchgezogenen Linien ist das Profil nach dem erfindungsgemäßen Verfahren dargestellt. In einer gestrichelten Linienführung ist das Profil dargestellt, welches sich nach dem Stand der Technik ergibt, wenn die Geometrie des Düsenspaltes 4 unabhängig von der Düsenspaltbreite eingestellt und vorgegeben ist. Zusätzlich ist in strichpunktierten Linien außenseitg der Umfang des zu fertigenden Hohlkörpers 12 angedeutet.

Aus einer vergleichenden Betrachtung der Fig. 3 und Fig. 4a bis 4d geht hervor, daß das auf den Schmelzestrom einwirkende Profil des Dorns 3 und/oder des Düsenrings 2 in Abhängigkeit einer auf die erste Programmkurve (WDS) abgestimmten weiteren Programmkurve (HP) des Wanddickenprogramms so geregelt wird, daß das Verhältnis der Dickstellen 13 und Dünnstellen 14 während des Ablaufs der Programmkurve WDS, unabhängig von der durch die erste Programmkurve WDS vorgegebenen Düsenspaltbreite annähernd konstant bleibt. Ferner erkennt man aus Fig. 3, daß die Profileinstellung des Dorns 3 und/oder des Düsenrings 2 bei vorgegebenen Wanddickenpunkten des ablaufenden Wanddickenprogramms, hier z. B. den Wanddickenpunkten WDP3 und WDP23 zugeschaltet und abgeschaltet wird. Das bedeutet, daß bei Fertigung des Butzens der Düsenspalt 4 ringförmig ist und vollständig geschlossen werden kann.

Die Nachteile eines nach dem Stand der Technik beschriebenen Verfahrens, welche durch die erfindungsgemäße Verfahrensweise beseitigt werden, sollen im folgenden anhand der gestrichelten Profilkurven in Fig. 4a bis 4d erörtert werden. Im Ausführungsbeispiel sollen Rechteckkanister 12 mit einer überall gleichmäßigen Wandstärke von 2 mm hergestellt werden. Um dieses Ergebnis zu erreichen, werden an den Wanddickenpunkten WDP8 und WDP9 (Fig.3) eine mittlere Düsenspaltbreite von 2,5 mm, am Wanddickenpunkt WDP11 ein mittlerer Düsenspalt von 2 mm und am Wanddickenpunkt WDP18 ein mittlerer Düsenspalt von 4 mm benötigt. Bei dieser Einstellung ergibt sich die geforderte Wanddickenverteilung in Längsrichtung des Kanisters. Da auch in Umfangsrichtung eine gleichmäßige Wanddickenverteilung gefordert ist, muß der Dorn 3 nach dem Stand der Technik die in Fig. 4a bis 4d gestrichelt eingestellten Konturen an den Wanddickenpunkten WDP8 und WDP9, WDP11 und WDP18 aufweisen. Beim Aufblasvorgang in der Blasform verreckt sich der Vorformling sowohl in Umfangsrichtung wie in Längsrichtung bis dieser überall an der gekühlten Innenkontur der Blasform anliegt. Um einen Kompromiß zwischen Stauchwert und Verzug bei Kanistern zu erreichen, muß die Profilierung des Dornes am Wanddickenpunkt WDP13, der im Ausführungsbeispiel der Profilierung an den Wanddickenpunkten WDP8 und 9 entspricht, so eingestellt werden, daß sich überall an der Umfangslinie eine Wanddicke von 2 mm ergibt. Bei einem schmalen Düsenspalt wirkt sich die Profilierung stärker aus als bei einem breiten Düsenspalt. Daher ist in der Querschnittebene, die dem Wanddickenpunkt WDP11 zugeordnet ist, der Eckbereich des Kanisters dicker als ein Sollwert. Ferner fällt die Wandstärke in einer Querschnittsebene, die dem Wanddickenpunkt WDP18 zugeordnet ist, in den Ecken dünner aus, was sich negativ auf den Stauchwert auswirkt. Dadurch, daß erfindungsgemäß das Verhältnis der Dickstellen und Dünnstellen stets annähernd konstant eingehalten wird, ergibt sich in Umfangsrichtung und in Längsrichtung eine deutliche Verbesserung in bezug auf die Gleichmäßigkeit der Wandstärke des gefertigten Hohlkörpers. Es versteht sich, daß die Erfindung auch zur Herstellung von Hohlkörpern, die dickwandige und dünnwandige Abschnitte aufweisen, eingesetzt werden kann. Durch das erfindungsgemäße Verfahren kann in Längsrichtung des Vorformlings auch in den Ecken die vorgegebene Wandstärke eingehalten werden.

Für die konstruktive Ausführung des Extrusionsblaskopfes bieten sich viele Möglichkeiten an. Die Fig. 5 bis 13 zeigen eine Auswahl weiterer bevorzugter Ausführungen, die zur Durchführung des erfindungsgemäßen Verfahrens einsetzbar sind. Alle dargestellten Stelleinrichtungen, die zur Beeinflussung der Düsenspaltgeometrie eingesetzt werden, können wahlweise im Rahmen der dynamischen Regelung nach der zweiten Programmkurve RWDS und/oder nach der dritten Programmkurve HP geregelt werden. Für das erfindungsgemäße Verfahren wesentlich ist, daß neben einer axialen Wanddickensteuerung (WDS) zusätzlich eine radialen Wanddickensteuerung (RWDS) und außerdem eine dritte Einstellung (HP) oder Steuerung oder mechanisch eingearbeitete Profilierung, mit der ein annähernd konstantes Verhältnis über die Schlauchlänge fortlaufender Dickstellen 13 und Dünnstellen 14 eingehalten wird, verwirklicht ist.

Bei der in Fig. 5a dargestellten Ausführung des Extrusionsblaskopfes ist der Düsenring 2 axial verschiebbar. Mittels einer ersten Programmkurve WDS werden axiale Stellbewegungen des Düsenrings 2 geregelt, wobei die Spaltbreite des Düsenspaltes sich über den Umfang verändert. Eine nach einer zweiten Programmkurve RWDS geregelte Stelleinrichtung wirkt auf eine elastisch verformbare Hülse 6' ein, die am Düsenring 2 gehalten ist. Der Dorn 3 besteht aus einem maschinenfest angeordneten Ring 9' und einer an einer Stellstange 8 angeschlossenen, relativ zum Ring 9' axial beweglichen Hülse 10'. Die Unterkante des Rings 9' ist mit einem wellenförmigen Profil 11 ausgerüstet, welches auf den Schmelzefluß einwirkt. Durch eine axiale Stellbewegung HP der Stellstange 8 verschließt die Hülse 10' mehr oder weniger das wellenförmige Profil 11, wodurch das Verhältnis der Dick- und Dünnstellen im Schmelzefluß nach dem erfindungsgemäßen Verfahren beeinflußt wird. Mit der beschriebenen Einrichtung ist beispielsweise ein Düsenspalt am Düsenaustritt einstellbar, wie er in Fig. 5b schematisch dargestellt ist. Die Fig. 5b zeigt in unmittelbarer Nähe des Düsenaustrittspaltes einen Schnitt durch den Strangpreßkopf. Sobald die Unterkante der Hülse 10' aus dem maschinenfest angeordneten Ring 9' herausragt, ist das wellenförmige Profil 11 nahezu ohne Wirkung, und es entsteht ein gleichmäßiger Düsenspalt, der den Schlauchlauf im Butzenbereich vergleichmäßigt und das Abreißen des Schlauches erheblich begünstigt.

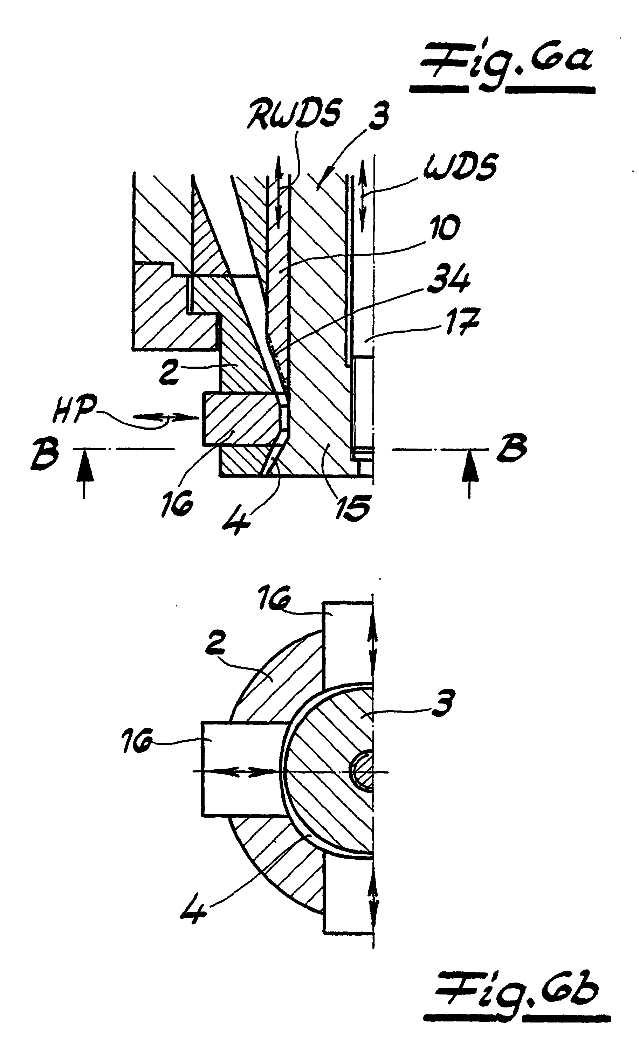

Bei der in Fig. 6a dargestellten Ausführung des Strangpreßkopfes weist der Dorn 3 einen mit einer Stellstange 17 beweglichen Dornkopf 15 und eine zum Dornkopf 15 axial bewegliche Profilhülse 10 auf. Die Profilhülse 10 umfaßt einen im Inneren des Strangpreßkopfes liegenden, rückwärtigen Abschnitt des Dornkopfes 15 und weist eine den Schmelzefluß formende Kontur 34 auf. Durch eine Verschiebung der Profilhülse verändert sich die Relation der Dickstellen und Dünnstellen im Schmelzefluß. Am Düsenring 2 sind Schieber 16 angeordnet, die auf den Schmelzefluß einwirken. Durch eine Stellbewegung der Schieber 16 wird das Verhältnis der Dick- und Dünnstellen beeinflußt und wird die Profilierung im Sinne der erfindungsgemäßen Lehre verstärkt, wenn der Düsenspalt durch eine axiale Stellbewegung WDS des Dornkopfes 15 breiter wird und wird die Profilierung abgeschwächt, wenn durch eine nach innen gerichtete axiale Stellbewegung WDS des Dorns 3 der Düsenspalt reduziert wird. Die Fig. 6b zeigt einen Schnitt durch den Gegenstand der Fig. 6a in der Schnittebene B-B. Der Darstellung in Fig. 6b entnimmt man, daß die Schieber 16 sternförmig angeordnet sind. Der Dorn 3 wird nach einer ersten Programmkurve WDS, die Profilhülse nach einer zweiten Programmkurve RWDS dynamisch geregelt. Die sternförmig angeordneten Schieber 16 können nach einer auf die erste Programmkurve WDS abgestimmten dritten Programmkurve HP des Wanddickenprogramms und/oder in Abhängigkeit der aus dem Düsenspalt austretenden Schlauchlänge so geregelt werden, daß das Verhältnis der Dick- und Dünnstellen während des Ablaufs des Wanddickenprogramms unabhängig von der durch die erste Programmkurve WDS vorgegebenen Düsenspaltbreite annähernd konstant bleibt. Um den Antriebs- und Steuerungsaufwand zu reduzieren, könnten die Schieber 16 bevorzugt im Dorn 3 angeordnet sein.

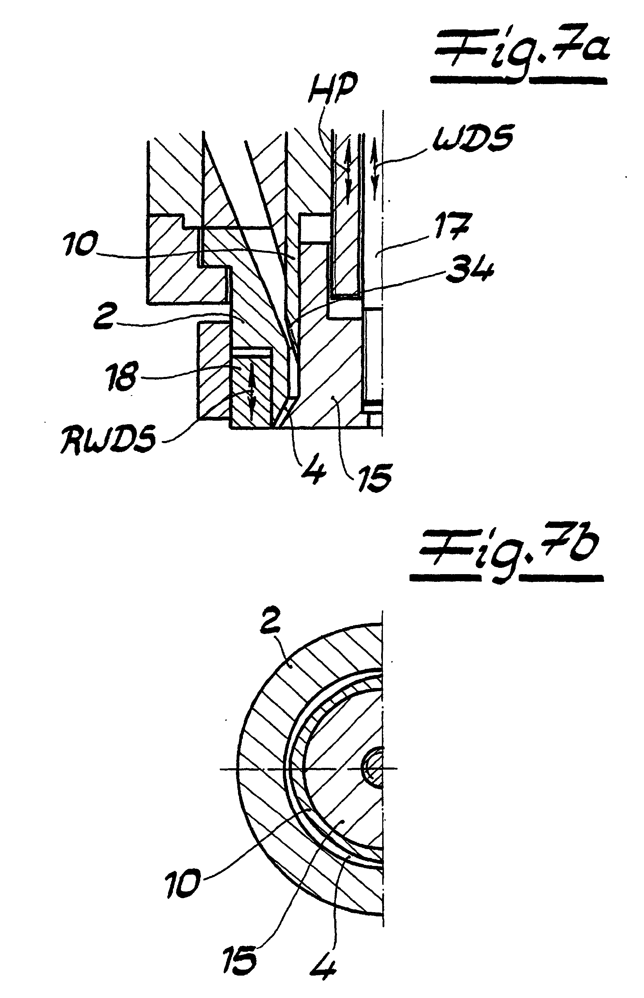

Auch bei der in den Fig. 7a und 7b dargestellten Ausführung weist der Dorn 3 einen mit einer Stellstange 17 beweglichen Dornkopf 15 und eine zum Dornkopf 15 axial bewegliche Profilhülse 10 auf, die einen im Inneren des Strangpreßkopfes liegenden, rückwärtigen Abschnitt des Dornkopfes 15 umfaßt und eine den Schmelzfluß formende Kontur aufweist. Am Düsenring 2 sind axial verstellbare Ringsegmente 18 angeordnet, deren Stellbewegungen von der Programmkurve RWDS gesteuert werden. Sie wirken auf den aus dem Düsenspalt austretenden schlauchförmigen Vorformling ein und erzeugen im Vorformling je nach Stellhub Dick- oder Dünnstellen. Die dem Dorn 3 zugeordnete Profilhülse 10 wird bei diesem Ausführungsbeispiel nach einer weiteren Programmkurve HP geregelt, und zwar so, daß das Verhältnis der Dick- und Dünnstellen während des Ablaufs der Programmkurve unabhängig von der durch die erste Programmkurve WDS vorgegebenen Düsenspaltbreite annähernd konstant bleibt.

In der Fig. 6a und 7a ist die Profilierung 34 an der Schräge der Profilhülse 10 angebracht. Die Erfindung ist auch anwendbar, wenn die Profilierung 34 statt dessen ein korrespondierenden Abschnitt des Düsenrings 2 vorhanden ist.

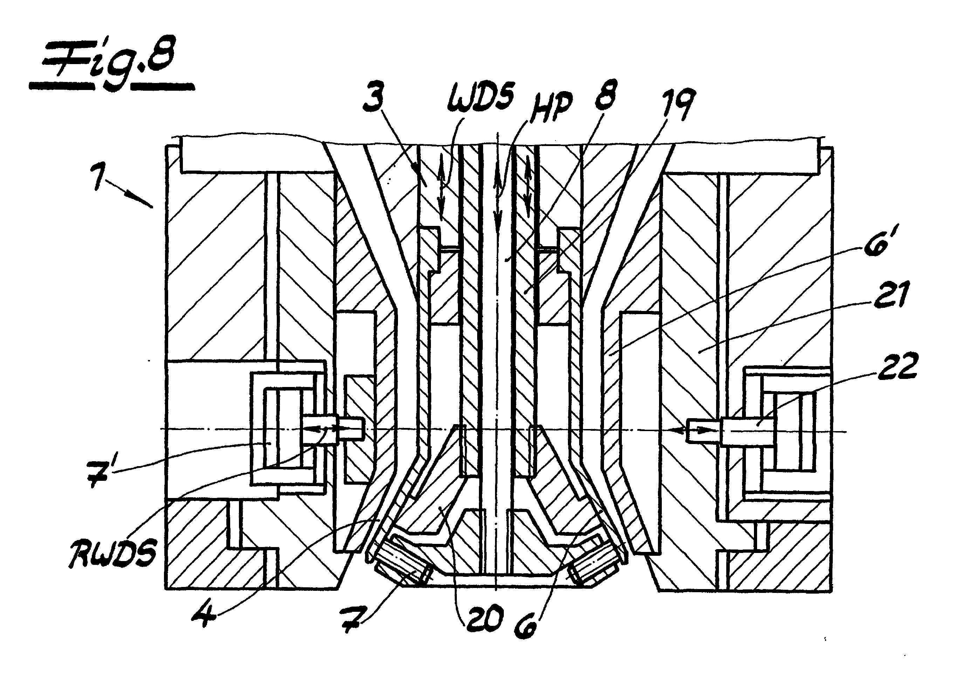

Bei der in Fig. 8 dargestellten Ausführung des Extrusionsblaskopfes ist der Dorn 3 mit einer den Düsenspalt begrenzenden elastisch verformbaren Hülse 6 ausgerüstet. Auf die Hülse 6 arbeiten im wesentlichen radial einwirkende Stellelemente 7, die sternförmig an eine im Dorn 3 axial bewegliche Stellstange 8 angeschlossen sind. Die Stellstange 8 durchfaßt ein ebenfalls im Dorn 3 beweglich geführtes Rohr 19, an das Zusatzstellelemente 20 angeschlossen sind. Mittels der Stellelemente 7 und der unabhängig von den Stellelementen 7 betätigbaren Zusatzstellelemente 20 ist die Kontur der Hülse 6 veränderbar. Durch Betätigung der Stellelemente 7 und/oder der Zusatzstellelemente 20 können im Schmelzefluß Dick- und Dünnstellen erzeugt bzw. das Verhältnis der Dick- und Dünnstellen beeinflußt werden. Auch ist es möglich, durch eine Betätigung der Zusatzstellelemente 20 eine durch die Stellelemente hervorgegebene Profilierung der elastisch verformbaren Hülse 6 aufzuheben. Der Düsenring 2 ist in dem in Fig. 8 dargestellten Ausführungsbeispiel ebenfalls mit einer elastisch verformbaren Hülse 6' ausgebildet. Die Hülse 6' ist mittels radial ausgerichteter Stellelemente 7', die als Kraftantriebe ausgebildet sind, deformierbar. Der Fig. 8 entnimmt man ferner, daß die Hülse 6' an einem Tragring 21 angeordnet ist, der durch Zusatzkraftantriebe 22 radial verschiebbar ist. Im Ausführungsbeispiel wird nach einer ersten Programmkurve WDS des Wanddickenprogramms die axiale Stellbewegung des Dorns 3 geregelt und dadurch die Düsenspaltbreite über den gesamten Umfang verändert. Nach Maßgabe einer zweiten Programmkurve RWDS des Wanddickenprogramms werden die auf die elastische Hülse 6' des Düsenrings 2 wirkenden Kraftantriebe 7' geregelt, wobei die Düsenspaltgeometrie verändert wird. Mittels der auf die Hülse 6 des Dorns 3 wirkenden Stellelemente 7 wird die Profilierung des aus dem Düsenspalt austretenden schlauchförmigen Vorformlings verstärkt, wenn der Düsenspalt breiter ist als ein Referenzwert, und wird die Profilierung des aus dem Düsenspalt austretenden schlauchförmigen Vorformlings wieder abgeschwächt, wenn der Düsenspalt schmaler ist als der Referenzwert. Die Stellbewegungen der auf die Stellelemente 7 einwirkenden Stellstange 8 ist durch den Richtungspfeil HP gekennzeichnet. Zusätzliche Korrekturmöglichkeiten ergeben sich durch radiale Stellbewegungen des Tragrings 21, an dem die elastisch verformbare Hülse 6' des Düsenrings 2 angeschlossen ist. Die Steuer- und Regelvorgänge werden so vorgenommen, daß das Verhältnis der Dick- und Dünnstellen während des Ablaufs der Programmkurve unabhängig von der durch die Programmkurve WDS vorgegebenen Düsenspaltbreite annähernd konstant bleibt. Zusätzlich kann die Profileinstellung des Dorns 3 und/oder des Düsenrings 2 bei vorgegebenen Werten des ablaufenden Wanddickenprogramms und/oder in Abhängigkeit der aus dem Düsenspalt austretenden Schlauchlänge zugeschaltet und abgeschaltet werden.

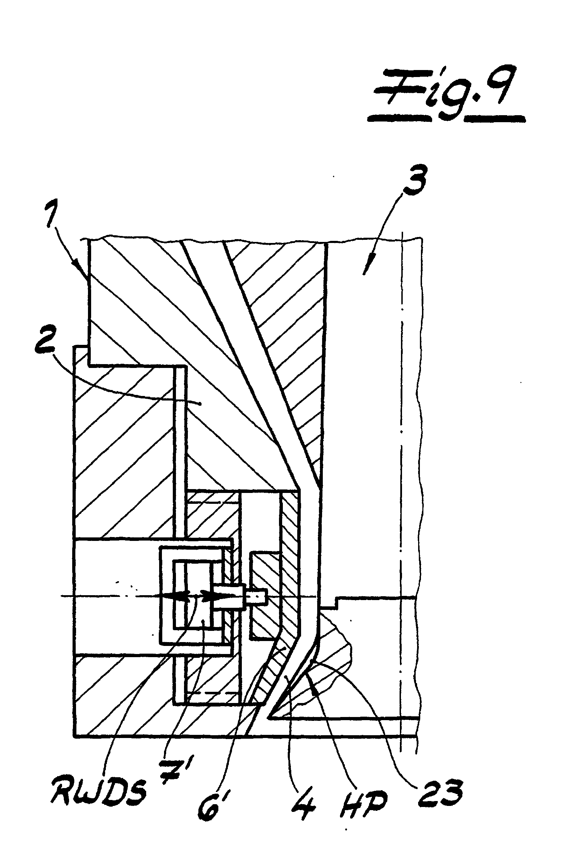

Bei der in Fig. 9 dargestellten Ausführung des Strangpreßkopfes ist der Düsenring 2 ebenfalls mit einer elastisch verformbaren Hülse 6' ausgerüstet. Auf die Hülse 6' arbeiten im wesentlichen radial einwirkende Stellelemente 7', die als steuerbare Kraftantriebe ausgebildet sind. Auch andere, im Zusammenhang mit der Gestaltung des Düsenrings 2 beschriebene Anordnungen, die eine Beeinflussung des Schmelzestroms ermöglichen, sind einsetzbar. Die kegelförmige Mantelfläche des Dorns 3 ist mit einem den Schmelzefluß formenden, wellenförmigen Querschnittsprofil 23 versehen. Dem in Fig. 9 dargestellten Ausschnitt ist zu entnehmen, daß die Profiltiefe des in die Mantelfläche des Dorns 3 eingearbeiteten Profils 23 in Schmelzeflußrichtung zum Düsenaustritt abnimmt. Der Dorn 3 führt nach einer ersten Programmkurve WDS des Wanddickenprogramms geregelte axiale Stellbewegungen aus, wobei die Düsenspaltbreite sich über den gesamten Umfang verändert. Das in die kegelförmige Mantelfläche des Dorns 3 eingearbeitete Profil 23 mit einer zum Düsenaustritt abnehmenden Profiltiefe bewirkt, daß mit einer die Düsenspaltbreite vergrößernden Ausschubbewegung des Dorns 3 zugleich das Profil des Düsensaustrittsspaltes verstärkt und mit einer die Düsenspaltbreite reduzierenden Einziehbewegung des Dorns zugleich das Profil des Düsenaustrittsspaltes abgeschwächt wird. Das auf den Schmelzestrom einwirkende Profil 23 des Dorns 3 ist mit den Stellhub der Stellbewegung WDS so abgestimmt, daß das Verhältnis der Dick- und Dünnstellen während des Ablaufs der Programmkurve unabhängig von der durch die Programmkurve WDS vorgegebenen Düsenspaltbreite annähernd konstant bleibt. Die elastisch verformbare Hülse 6' des Düsenrings 2 wird von der Stellbewegung des Dorns 3 unabhängig durch die Kraftantriebe 7' verformt, die nach einer zweiten Programmkurve RWDS des Wanddickenprogramms geregelt werden. Da das wellenförmige Profil 23 des Dorns 3 zum Austrittsende hin abnimmt und der Dorn bei Düsenverschluß bis auf einen kleinen Restspalt hineingezogen wird und diese Stellung keine Produktionsstellung ist, d. h. keine Dick- und Dünnstellen erzeugt werden müssen, kann das Ende des Dorns so ausgeführt sein, daß die Profilierung am Dorn bei Düsenverschluß nicht wirksam ist.

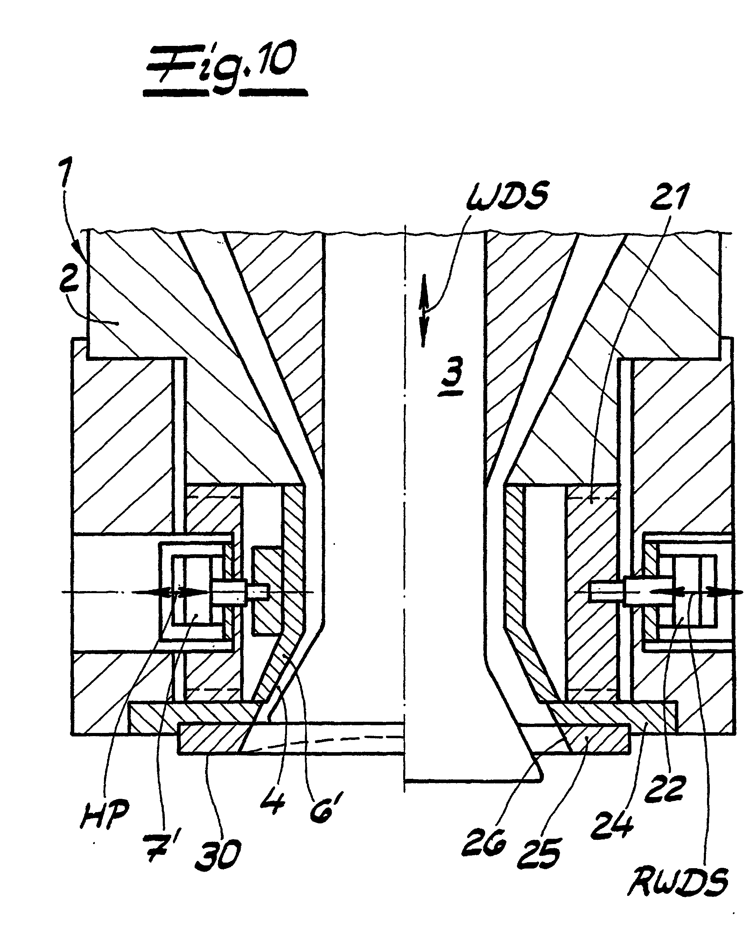

Bei der in Fig. 10 dargestellten Ausführung des Extrusionsblaskopfes ist der Dorn 3 kegelförmig ohne Profilierung ausgebildet. Der Dorn 3 führt axiale Stellbewegungen nach einer ersten Programmkurve WDS des Wanddickenprogramms aus,
wobei die Düsenspaltbreite über den gesamten Umfang verändert wird. Der Düsenring 2 besteht aus einem im Düsengehäuse 1 radial beweglichen Tragring 21 und einer elastisch verformbaren Hülse 6', die den Schmelzekanal begrenzt. Zur Profilierung der Hülse 6' sind Kraftantriebe 7' vorgesehen, die im Ausführungsbeispiel sternförmig angeordnet und am Tragring 21 gehalten sind. Die Stellbewegungen der Kraftantriebe 7' werden nach Maßgabe einer Programmkurve HP so geregelt, daß das Verhältnis der Dick- und Dünnstellen während des Ablaufs der Programmkurve unabhängig von der durch die erste Programmkurve WDS vorgegebenen Düsenspaltbreite annähernd konstant bleibt. Für die radiale Verstellung des Tragrings 21 ist mindestens ein Zusatzkraftantrieb 22 vorgesehen, der am Düsengehäuse 1 gehalten ist. Der Zusatzkraftantrieb 22 wird nach Maßgabe einer zweiten Programmkurve RWDS des Wanddickenprogramms geregelt. Der Fig. 10 entnimmt man, daß an der Düsenunterseite eine Kopfplatte 24 mit einem ringförmigen Einsatz 25 in das Düsengehäuse eingesetzt ist. Die Kopfplatte 24 dient der Führung und Halterung der elastisch verformbaren Hülse 6' und gegebenenfalls des Tragrings 21. Der ringförmige Einsatz 25 ist austauschbar. Seine dem Schmelzekanal zugeordnete Wandfläche 26 kann z. B. zusätzlich wellenförmig profiliert werden und erzeugt in Kombination mit dem stellbeweglichen Tragring 21 und in Verbindung mit der Stellung des Dorns und/oder der Bewegung der Kraftantriebe 7' Dickund Dünnstellen in dem aus dem Düsenspalt austretenden schlauchförmigen Vorformling. Auch hier ist es möglich, statt einer wellenförmigen Profilierung der Innenfläche 26 die Stirnfläche 30 wellenförmig zu profilieren.

Bei der in den Fig. 11a und 11b dargestellten Ausführung des Strangpreßkopfes weist der Dorn 3 eine elastisch verformbare Hülse 6 auf. Das Wandprofil des Dorns 3 ist durch Stellschrauben 27, die radial auf die Hülse 6 einwirken, einstellbar. Nach Maßgabe einer ersten Programmkurve WDS des Wanddickenprogramms ist die axiale Stellbewegung des Dorns 3 geregelt und wird dadurch die Düsenspaltbreite über den gesamten Umfang verändert. Der Düsenring 2 besteht aus einem maschinenfest angeordneten Ring 9 und einer axial über Stellspindeln dazu verstellbaren Profilhülse 10, die ein auf den Schmelzefluß einwirkendes wellenförmiges Profil 11 aufweist. Die Profilhülse 10 ist zusätzlich mit einem oder mehreren ringsegmentförmigen Schiebern 28 versehen, die Stellbewegungen in axialer Richtung ausführen und ebenfalls auf den Schmelzefluß einwirken. Die Schieber 28 werden nach Maßgabe einer zweiten Programmkurve RWDS des Wanddickenprogramms geregelt und verändern die Düsenspaltgeometrie bzw. erzeugen Dick- oder Dünnstellen in dem austretenden thermoplastifizierten Vorformling 5. Mit Stellspindeln 33 wird die Position der Profilhülse 10 soweit über die Unterkante 32 des Ringes 9 eingestellt, daß in Abhängigkeit der ersten Programmkurve WDS die gewünschten Dickund Dünnstellen erzeugt werden. Durch die Einstellung der Profilhülse 10 relativ zu dem maschinenfesten Ring 9 kann die Profilierung des Vorformlings verstärkt oder abgeschwächt werden.

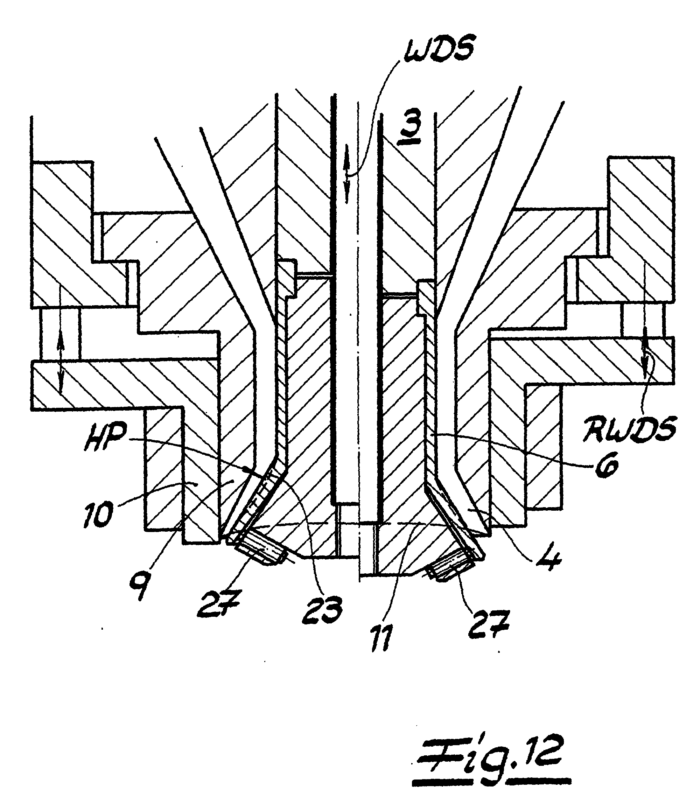

Die in der Fig. 12 dargestellte Ausführung unterscheidet sich von der Ausführung gemäß Fig. 11 dadurch, daß die Profilhülse 10 keine axial verstellbaren Schieber aufweist und daß das wellenförmige Profil 11 nicht auf der Profilhülse 10 sondern auf der Stirnfläche des maschinenfest angeordneten Ringes 9 angeordnet ist. Die kegelförmige Mantelfläche des Dorns 3 bzw. der auf dem Dorn angeordneten Hülse 6 ist mit einem den Schmelzefluß formenden, wellenförmigen Querschnittsprofil 23 versehen, wobei die Profiltiefe in Schmelzeflußrichtung zum Düsenaustritt abnimmt. Die Profilhülse 10 führt Stellbewegungen nach Maßgabe der zweiten Programmkurve RWDS des Wanddickenprogramms aus. Mit einer die Düsenspaltbreite vergrößernden Ausschubbewegung des Dorns 3 wird zugleich die Profilierung des Düsenaustrittspaltes verstärkt und mit einer die Düsenspaltbreite reduzierenden Einziehbewegung des Dorns 3 wird zugleich die Profilierung des Düsenaustrittsspaltes abgeschwächt.

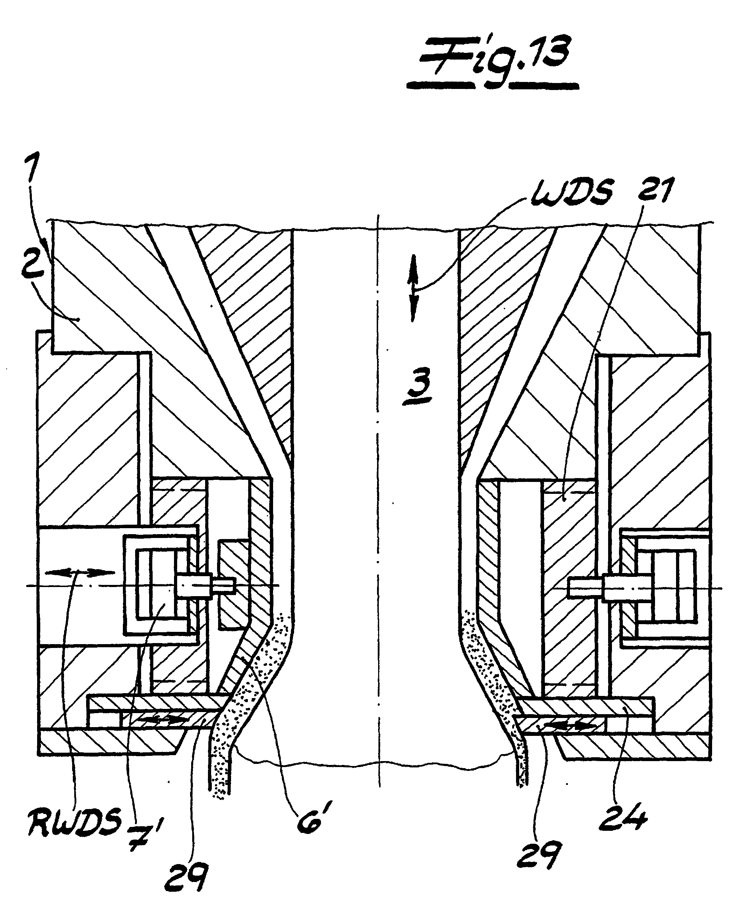

Bei der in Fig. 13 dargestellten Ausführung der Erfindung enthält das Düsengehäuse 1 radial verstellbare Schieber 29, die auf den Schmelzefluß einwirken, wobei durch eine Stellbewegung dieser Schieber 29 das Verhältnis der Dick- und Dünnstellen im Schmelzefluß beeinflußt wird. Bei dieser Ausführung sind Verstellvorrichtungen übereinander angeordnet. Im übrigen weist diese Ausführung die bereits behandelten Merkmale der Fig. 10 auf.

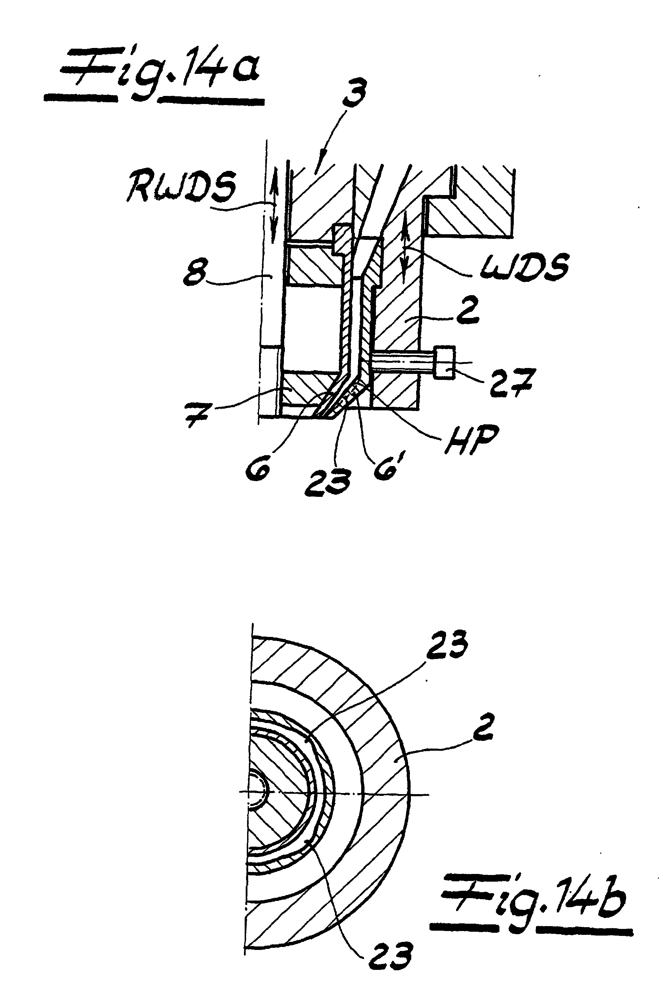

Bei der in den Fig. 14a und 14 b dargestellten Ausführung der Erfindung ist der Dorn 3 maschinenfest angeordnet und weist eine elastische Hülse 6 auf, die über im wesentlichen radiale Stellelemente 7 verformbar ist. Die Stellelemente 7 sind an eine Stellstange 8 angeschlossen, die axiale, nach der Programmkurve RWDS dynamisch geregelte Stellbewegungen ausführt. Der Düsenring 2 führt axiale Stellbewegungen aus, die nach der Programmkurve WDS dynamisch geregelt werden, wobei die Spaltbreite des Düsenspaltes sich nach Maßgabe des Stellhubes über den Umfang verändert. Der Düsenring 2 ist mit einer elastisch deformierbaren Hülse 6' ausgerüstet, deren Deformation durch im Düsenring angeordnete Stellschrauben 27 einstellbar ist. Die Hülse 6' weist zum Düsenaustritt hin einen kegelförmigen Abschnitt auf, der mit einem den Schmelzefluß formenden wellenförmigen Querschnittsprofil versehen ist. Das wellenförmige Querschnittsprofil wird gebildet durch im Querschnitt z. B. kreisbogenförmige Vertiefungen 23 der Hülse. Aus einer vergleichenden Betrachtung der Fig. 14a und 14b wird deutlich, daß die Profiltiefe des in die Hülse eingearbeiteten Profils 23 in Schmelzefließrichtung zum Düsenaustritt abnimmt. Mit einer die Düsenspaltbreite vergrößernden Ausschubbewegung des die Hülse 6' tragenden Düsenrings wird die Profilierung des Düsenspaltes verstärkt, und mit einer die Düsenspaltbreite reduzierenden Einziehbewegung des Düsenrings wird die Profilierung des Düsenspaltes abgeschwächt. Der Verlauf des auf den Schmelzestrom einwirkenden Profils 23 in Schmelzefließrichtung ist mit dem Stellhub der Stellbewegung WDS so abgestimmt, daß das Verhältnis der Dickund Dünnstellen während des Ablaufs der Programmkurve unabhängig von der durch die Programmkurve WDS vorgegebenen Düsenspaltbreite annähernd konstant bleibt. In Fig. 14a ist der Verlauf des Profils daher auch als hubabhängige Profilierung HP bezeichnet. Um eine partielle Schwächung der deformierbaren Hülse 6' durch die Profilierung 23 zu vermeiden, nimmt die Wandstärke des kegelförmigen Abschnittes der Hülse 6' nach Maßgabe der Profiltiefe der in den kegelförmigen Abschnitt eingearbeiteten Profilierung zum rückwärtigen Ende des kegelförmigen Abschnittes hin zu. Somit besitzt die Hülse in dem Bereich, in dem die Profilierung stark ausgebildet ist, eine größere Wandstärke als an dem düsenaustrittsseitigen Ende.

Anhand der Ausführungsbeispiele sind Einrichtungen dargestellt worden, um den Schmelzefluß durch den Düsenspalt zu beeinflussen. Die dem Dorn zugeordneten Einrichtungen und die dem Düsenring zugeordneten Einrichtungen sind in beliebiger Weise kombinierbar. Bei allen Ausführungen können der Düsenring 2 und/oder ein Teil der Düse, z. B. der Tragring 21, relativ zum Dorn 3 verschoben werden.

## Patentansprüche

1. Verfahren zum Extrusionsblasformen von Hohlkörpern, insbesondere zur Herstellung von Hohlkörpern mit einem von der Kreisform abweichenden Querschnitt, bei dem ein schlauchförmiger Vorformling (5) mit einer Profilierung aus dem von einem Dorn (3) und einem Düsenring (2) begrenzten Düsenspalt (4) eines Strangpreßkopfes austritt, dessen Düsenspaltbreite und dessen Düsenspaltgeometrie nach Maßgabe eines Wanddickenprogramms und/oder in Abhängigkeit der aus dem Düsenspalt (4) austretenden Schlauchlänge geregelt wird, und bei dem der extrudierte Vorformling (5) anschließend in einer Blasform zu einem Hohlkörper aufgeweitet wird,
wobei nach Maßgabe einer ersten Programmkurve (WDS) des Wanddickenprogramms eine axiale Stellbewegung des Dorns (3) und/oder des Düsenrings (2) geregelt und dadurch die Düsenspaltbreite über den gesamten Umfang verändert wird und
wobei nach Maßgabe einer zweiten Programmkurve (RWDS) des Wanddickenprogramms eine Stelleinrichtung (7) geregelt wird, welche die Düsenspaltgeometrie verändert,
**dadurch gekennzeichnet, daß** die Düsenspaltgeometrie zusätzlich durch ein mechanisch eingearbeitetes Profil oder durch eine dritte, unabhängig von der Regelung der Düsenspaltgeometrie nach der zweiten Programmkurve (RWDS) vorgenommene Einstellung (HP) oder Steuerung einer den Schmelzefluß beeinflussenden Stelleinrichtung (10) verändert wird, und zwar so,
daß die Profilierung des Vorformlings (5) verstärkt wird, wenn der Düsenspalt breiter ist als ein Referenzwert, und
daß die Profilierung des Vorformlings (5) abgeschwächt wird, wenn der Düsenspalt (4) schmaler ist als der Referenzwert.

2. Verfahren nach Anspruch 1, **dadurch gekennzeichnet, daß** das auf den Schmelzestrom einwirkende Profil in Abhängigkeit einer auf die erste Programmkurve (WDS) abgestimmten weiteren Programmkurve (HP) des Wanddickenprogramms und/oder in Abhängigkeit der aus dem Düsenspalt (4) austretenden Schlauchlänge so geregelt wird, daß das Verhältnis der Dick- und Dünnstellen (13, 14) während des Ablaufes der Programmkurve unabhängig von der durch die erste Programmkurve (WDS) vorgegebenen Düsenspaltbreite annähernd konstant bleibt.

3. Verfahren nach Anspruch 1, **dadurch gekennzeichnet, daß** das auf den Schmelzestrom einwirkende Profil in Abhängigkeit einer auf die erste Programmkurve (WDS) abgestimmten weiteren Programmkurve (HP) des Wanddickenprogramms geregelt wird, deren Verlauf sich aus einer Multiplikation der Funktionswerte der ersten Programmkurve (WDS) mit einem im Bereich F < 1 festgelegten Werte (F) ergibt.

4. Verfahren nach einem der Ansprüche 1 bis 3, **dadurch gekennzeichnet, daß** die Profileinstellung des Dorns (3) und/oder des Düsenrings (2) bei vorgegebenen Werten des ablaufenden Wanddickenprogramms und/oder in Abhängigkeit der aus dem Düsenspalt (4) austretenden Schlauchlänge zugeschaltet und/oder abgeschaltet wird.

5. Verfahren nach einem der Ansprüche 1 bis 4, **dadurch gekennzeichnet, daß** zur Verstärkung der Profilierung des aus dem Düsenspalt (4) austretenden Vorformlings (5) ein Stellelement in Form einer Profilhülse (10) oder eines Ringsegments (18) verwendet wird, das an einen maschinenfesten Ring (9) axial verstellbar angeordnet ist und dessen Stirnfläche ein auf den Schmelzefluß einwirkendes wellenförmiges Profil (11) aufweist.

6. Verfahren nach einem der Ansprüche 1 bis 4, **dadurch gekennzeichnet, daß** der Dorn (3) und/oder der Düsenring (2) mit einer den Düsenspalt begrenzenden elastisch verformbaren Hülse (6) ausgerüstet ist und auf die Hülse (6) im wesentlichen radial einwirkende Stellelemente (7) arbeiten und daß durch Betätigung der Stellelemente (7) das Verhältnis der Dick- und Dünnstellen (13, 14) im Schmelzefluß beeinflußt wird.

7. Verfahren nach einem der Ansprüche 1 bis 4, **dadurch gekennzeichnet, daß** am Düsenring (2) und/oder im Dorn (3) verstellbare Schieber (16) angeordnet sind, die auf den Schmelzefluß einwirken, und daß durch eine Stellbewegung der Schieber (16) das Verhältnis der Dick- und Dünnstellen (13, 14) im Schmelzefluß beeinflußt wird.

8. Verfahren nach einem der Ansprüche 1 bis 4, **dadurch gekennzeichnet, daß** der Dorn (3) einen mit einer Stellstange (17) beweglichen Dornkopf (15) und eine zum Dornkopf (15) axial bewegliche Profilhülse (10) aufweist, wobei die Profilhülse (10) im Innern des Strangpreßkopfes koaxial zum Dorn (3) angeordnet ist und wobei die Profilhülse (10) und/oder ein mit der Profilhülse (10) korrespondierender Abschnitt eine den Schmelzefluß formende Kontur (34) aufweist und daß durch eine Verschiebung der Profilhülse (10) die Dick- und Dünnstellen (13, 14) im Schmelzefluß verändert werden.

9. Verfahren nach einem der Ansprüche 1 bis 4, **dadurch gekennzeichnet, daß** die von der zweiten Programmkurve (RWDS) gesteuerte Stelleinrichtung und eine stellbewegliche Zusatzeinrichtung zur Verstärkung der Profilierung des aus dem Düsenspalt austretenden schlauchförmigen Vorformlings (5) in Schmelzefließrichtung hintereinander angeordnet sind.

10. Verfahren nach einem der Ansprüche 1 bis 4, **dadurch gekennzeichnet, daß** die düsenaustrittsseitige Stirnfläche des Dorns (3) oder eines Teils des Dorns und/oder des Düsenrings (2) oder eines Teils des Düsenrings ein auf den Schmelzefluß einwirkendes Profil aufweist und daß mit einer nach der ersten Programmkurve (WDS) gesteuerten axialen Stellbewegungen des Dorns (3) oder des Düsenrings (2) das Verhältnis der Dick- und Dünnstellen (13, 14) im Schmelzefluß beeinflußt wird.

11. Verfahren nach einem der Ansprüche 1 bis 4, **dadurch gekennzeichnet, daß** eine kegelförmige Mantelfläche des Dorns (3) und/oder des Düsenrings (2) mit einem den Schmelzefluß formenden, wellenförmigen Querschnittsprofil (23) versehen ist und daß mit einer die Düsenspaltbreite vergrößernden Ausschubbewegung des Dorns (3) und/oder des Düsenrings (2) zugleich die Profilierung des Düsenspaltes verstärkt und mit einer die Düsenspaltbreite reduzierenden Einziehbewegung des Dorns (3) oder des Düsenrings (2) zugleich die Profilierung des Düsenspaltes abgeschwächt wird.

12. Verfahren nach Anspruch 11, **dadurch gekennzeichnet, daß** die mit einem wellenförmigen Querschnittsprofil ausgebildete kegelförmige Mantelfläche den Düsenspalt (4) begrenzt und daß die Profiltiefe (HP) des wellenförmigen Profils (23) in Schmelzefließrichtung zum Düsenaustritt abnimmt.

13. Verfahren nach einem der Ansprüche 1 bis 4, **dadurch gekennzeichnet, daß** der Dorn (3) und/oder der Düsenring (2) mit einer elastischen Hülse (6) ausgerüstet ist, die zum Düsenaustritt einen kegelförmigen Abschnitt aufweist und durch im wesentlichen radial angeordnete Stellelemente (7) deformierbar ist, daß die kegelförmige Mantelfläche der Hülse (6) mit einem den Schmelzefluß formenden, wellenförmigen Querschnittsprofil (23) versehen ist, wobei die Profiltiefe des in die Hülse eingearbeiteten Profils (23) in Schmelzefließrichtung zum Düsenaustritt abnimmt, und daß mit einer die Düsenspaltbreite vergrößernden Ausschubbewegung des mit der Hülse versehenen Dorns (3) oder des mit der Hülse versehenen Düsenrings (2) zugleich das Profil des Düsenspaltes verstärkt und mit einer die Düsenspaltbreite reduzierenden Einziehbewegung des Dorns (3) oder des Düsenrings (2) das Profil des Düsenspaltes abgeschwächt wird.

14. Verfahren nach einem der Ansprüche 1 bis 13, **dadurch gekennzeichnet, daß** die Wand des Schmelzekanals in Fließrichtung vor der kegelförmigen Mantelfläche, in die das Profil eingearbeitet ist, Einlaufvertiefungen aufweist, welche den Schmelzefluß zu den Vertiefungen des in die kegelförmige Wandfläche eingearbeiteten Profils begünstigen.

15. Verfahren nach einem der Ansprüche 11 bis 14, **dadurch gekennzeichnet, daß** die Profiltiefe in Fließrichtung zum Düsenaustritt so weit abnimmt, daß der Düsenspalt durch eine axiale Stellbewegung des Dorns (3) oder des Düsenrings (2) in einer Endposition verschließbar ist.

## Claims

1. A method for extrusion blow moulding hollow bodies, particularly for manufacturing hollow bodies having a profile that is non-circular, according to which a tubular preform (5) with a shaped section exits the nozzle gap (4) of an extrusion head which is delimited by a mandrel (3) and a nozzle ring (2), the nozzle gap width and nozzle gap geometry of which is controlled according to a wall thickness program and/or according to the length of the tubular preform exiting the nozzle gap (4), and in which the extruded preform (5) is subsequently expanded into a hollow body in a blowing mould,
wherein an axial displacement of the mandrel (3) and/or the nozzle ring (2) is governed in accordance with the guidance from a first program curve (WDS) of the wall thickness program, so that the nozzle gap width is thereby modified about its entire circumference and
wherein a positioning device (7) is controlled according to a second program curve (RWDS) of the wall thickness program, which alters the geometry of the nozzle gap,
**characterised in that** the nozzle gap geometry is also altered by a mechanically integrated profile, or by a third adjustment (HP) which is independent of the nozzle gap geometry control according to the second program curve (RWDS), or by control of an adjustment means (10) influencing the melt flow such that
the profile of the preform (5) is increased when the nozzle gap is wider than a reference value, and,
the profile of the preform (5) is reduced when the nozzle gap (4) is narrower than the reference value.

2. The method according to claim 1, **characterised in that** the profile influencing the melt flow is controlled according to a further program curve (HP) of the wall thickness program, which is synchronised with the first program curve (WDS), and/or according to the length of the tube exiting the nozzle gap (4) so that the ratio of thick and thin regions (13, 14) remains approximately constant over the entire course of the program curve regardless of the nozzle gap width set by the first program curve (WDS).

3. The method according to claim 1, **characterised in that** the profile influencing the melt flow is controlled by a further program curve (HP) of the wall thickness program, which is synchronised with the first program curve (WDS), the gradient of which is obtained by multiplying the function values of the first program curve (WDS) with a fixed value (F) in the range F < 1.

4. The method according to any of claims 1 to 3, **characterised in that** the profile setting of the mandrel (3) and/or the nozzle ring (2) is switched on and/or off for predefined values of the running wall thickness program and/or depending on the length of the tube exiting from the nozzle gap (4).

5. The method according to any of claims 1 to 4, **characterised in that** an adjustment means in the form of a contoured sleeve (10) or a ring segment (18) is used to enhance the profiling of the preform (5) exiting the nozzle gap (4) and which is attached in axially displaceable manner to a ring (9) that is immovably secured to the machine, and whose frontal surface is furnished with an undulating profile (11) influencing the melt flow.

6. The method according to any of claims 1 to 4, **characterised in that** the mandrel (3) and/or the nozzle ring (2) are equipped with an elastically deformable sleeve (6) that delimits the nozzle gap, and essentially radially acting displacement means (7) act on sleeve (6) and the ratio of thick and thin points (13, 14) in the melt flow is influenced by the operation of displacement means (7).

7. The method according to any of claims 1 to 4, **characterised in that** movable sliders (16) are arranged on the nozzle ring (2) or in the mandrel (3) and influence the melt flow, and that the ratio of thick and thin points (13, 14) in the melt flow is influenced by an adjustment movement of the sliders (16).

8. The method according to any of claims 1 to 4, **characterised in that** the mandrel (3) includes a mandrel head (15) that is movable with displacement rod (17) and a contoured sleeve (10) that is axially displaceable relative to the mandrel head (15), wherein the contoured sleeve (10) is arranged inside the extrusion head and coaxially with the mandrel (3), and wherein contoured sleeve (10) and/or a section corresponding to contoured sleeve (10) has a contour (34) modifying the melt flow and that moving the contoured sleeve (10) alters the thick and thin points (13, 14) in the melt flow.

9. The method according to any of claims 1 to 4, **characterised in that** the adjustment device controlled by the second program curve (RWDS) and an additional adjustable device are arranged in series in the direction of the melt flow to reinforce the profiling of the tubular preform (5) exiting the nozzle gap.

10. The method according to any of claims 1 to 4, **characterised in that** the frontal surface of the mandrel (3) of a part of the mandrel and/or of the nozzle ring (2) or a part of the nozzle ring at the nozzle outflow side has a profile that modifies the melt flow and that the ratio of thick and thin points (13, 14) in the melt flow is modified by an axial displacement of the mandrel (3) or the nozzle ring (2) controlled in accordance with the first program curve (WDS).

11. The method according to any of claims 1 to 4, **characterised in that** a tapered surface area of the mandrel (3) and/or the nozzle ring (2) is provided with an undulating profile (23) that shapes the melt flow, and that an ejection motion of the mandrel (3) and/or of the nozzle ring (2) increases both the size of the nozzle gap width and the profiling of the nozzle gap, while a retracting motion of the mandrel (3) or of the nozzle ring (2) that reduces the size of the nozzle gap width also reduces the profiling of the nozzle gap.

12. The method according to claim 11, **characterised in that** the tapered surface area conformed with an undulating profile delimits the nozzle gap (4), and that the profile depth (HP) of the undulating profile (23) becomes progressively more shallow in the direction of flow towards the nozzle outlet.

13. The method according to any of claims 1 to 4, **characterised in that** the mandrel (3) and/or the nozzle ring (2) is equipped with an elastic sleeve (6), which has a cutout tapered towards the nozzle outflow and which is deformable by radially arranged adjustment means (7), that the tapered surface area of the sleeve (6) is provided with an undulating cross-sectional profile (23) that forms the melt flow, wherein the profile depth of the profiling (23) conformed in the sleeve becomes progressively more shallow in the direction of the melt flow towards the nozzle exit, and that an ejection motion of the mandrel (3) furnished with the sleeve or of the nozzle ring (2) furnished with the sleeve that increases the size of the nozzle gap width also increases the profiling of the nozzle gap, while a retracting motion of the mandrel (3) or of the nozzle ring (2) that reduces the width of the nozzle gap width also reduces the profiling of the nozzle gap.

14. The method according to any of claims 1 to 13 **characterised in that** the wall of the melt channel upstream of the tapered surface area that is contoured is furnished with inflow recesses which improve the flow of the molten mass towards the recesses in the profile conformed in the tapered wall surface.

15. The method according to any of claims 11 to 14, **characterised in that** the profile depth is reduced in the direction of flow towards the nozzle exit to such a degree that the nozzle gap may be closed in a final position by an axial adjustment movement of the mandrel (3) or of the nozzle ring (2).

## Revendications

1. Procédé pour l'extrusion-soufflage de corps creux, notamment pour la fabrication de corps creux avec une section divergeant de la forme circulaire, dans lequel un paraison tubulaire (5) avec un profilage sort d'une fente (4) de tête de boudineuse délimitée par un mandrin (3) et une bague de filière (2), fente (4) dont la largeur et la géométrie sont réglées conformément à un programme pour épaisseur de paroi et/ou en fonction de la longueur du tube qui en sort, et dans lequel la préforme extrudée (5) est ensuite élargie dans un moule de soufflage pour donner un corps creux,
un mouvement axial de réglage du mandrin (3) et/ou de la bague de filière (2) étant asservi selon une première courbe (WDS) du programme pour épaisseur de paroi, ce qui modifie la largeur de fente sur tout le périmètre et
un dispositif de réglage (7) étant asservi selon une seconde courbe (RWDS) du programme pour épaisseur de paroi, dispositif qui modifie la géométrie de la fente,
**caractérisé en ce que** la géométrie de la fente est de plus modifiée au moyen d'un profil incorporé mécaniquement ou au moyen d'un troisième réglage (HP) effectué indépendamment du réglage de géométrie de la fente selon la seconde courbe de programme (RWDS) ou d'un asservissement d'un dispositif de réglage régulant le flux de matière en fusion, ce de sorte
à accentuer le profilage du paraison (5) lorsque la fente est supérieure à une valeur de référence, et
à atténuer le profilage du paraison (5) lorsque la fente (4) est inférieure à la valeur de référence.

2. Procédé selon la revendication 1 **caractérisé en ce que** le profil qui agit sur le débit de matière en fusion est régulé en fonction d'une autre courbe du programme pour épaisseur de paroi (HP) synchronisée sur la première courbe de programme (WDS) et/ou en fonction de la longueur du tube sortant de la fente (4), de sorte qu'en cours de déroulement de la courbe, le rapport entre les zones épaisses et fines (13, 14) reste à peu près constant, ce indépendamment de la largeur de fente prédéfinie par la première courbe de programme (WDS).

3. Procédé selon la revendication 1 **caractérisé en ce que** le profil qui agit sur le débit de matière en fusion est régulé en fonction d'une autre courbe du programme pour épaisseur de paroi (HP) synchronisée sur la première courbe de programme (WDS), dont le déroulement résulte de la multiplication des valeurs de la fonction pour la première courbe de programme par une valeur (F) définie par F < 1.

4. Procédé selon l'une des revendications 1 à 3 **caractérisé en ce que** le réglage du profil du mandrin (3) et/ou de la bague de filière (2) est activé et/ou coupé à des valeurs prédéfinies du programme pour épaisseur de paroi en cours de déroulement et/ou en fonction de la longueur du tube sortant de la fente (4).

5. Procédé selon l'une des revendications 1 à 4 **caractérisé en ce qu'**à des fins d'accentuation du profilage du paraison (5) sortant de la fente (4), on utilise un élément de réglage sous la forme d'une gaine à profil (10) ou d'un segment annulaire (18), lequel est disposé ajustable en sens axial sur une bague (9) montée fixe sur la machine et dont le front présente un profil ondulé (11) agissant sur le flux de matière fondue.

6. Procédé selon l'une des revendications 1 à 4 **caractérisé en ce que** le mandrin (3) et/ou la bague de filière (2) sont équipés d'une gaine (6) élastiquement déformable délimitant la fente, et des éléments de réglage (7) à effet essentiellement radial agissent sur cette gaine (6) et **en ce que** l'actionnement des éléments de réglage (7) permet d'influer sur le rapport entre zones épaisses et zones fines (13, 14) dans le flux de matière fondue.

7. Procédé selon l'une des revendications 1 à 4 **caractérisé en ce que** sur la bague de filière (2) et/ou dans le mandrin (3) sont disposés des coulisses déplaçables (16) qui agissent sur le flux de matière fondue, et **en ce qu'**un mouvement de réglage des coulisses (16) permet d'influer sur le rapport entre zones épaisses et zones fines (13, 14) dans le flux de matière fondue.

8. Procédé selon l'une des revendications 1 à 4 **caractérisé en ce que** le mandrin (3) présente une tête (15) mobile avec une tige de réglage (17) et une gaine à profil (10) déplaçable en sens axial en direction de la tête de mandrin (15), la gaine à profil (10) étant disposée de manière coaxiale au mandrin (3) à l'intérieur de la tête de filière et la gaine à profil (10) et/ou une section correspondant avec elle (10) présentant un contour (34) configurant le flux de matière fondue et **en ce qu'**un décalage de la gaine à profil (10) modifie la relation entre zones épaisses et zones fines (13, 14) dans le flux de matière fondue.

9. Procédé selon l'une des revendications 1 à 4 **caractérisé en ce qu'**à des fins d'accentuation du profilage du paraison tubulaire (5) sortant de la fente, le dispositif de réglage asservi à la seconde courbe de programme (RWDS) et un dispositif supplémentaire à mouvement de réglage sont disposés l'un derrière l'autre dans le sens d'écoulement du plastique fondu.

10. Procédé selon l'une des revendications 1 à 4 **caractérisé en ce que** le front tourné vers la sortie de filière, du mandrin (3) ou d'une partie du mandrin et/ou de la bague de filière (2) ou d'une partie de la bague de filière, présente un profil agissant sur le débit de matière fondue, et **en ce qu'**on influe sur le rapport entre zones épaisses et zones fines (13, 14) dans le flux de matière fondue avec un mouvement de réglage axial du mandrin (3) ou de la bague de filière (2), asservi selon la première courbe de programme (WDS).

11. Procédé selon l'une des revendications 1 à 4 **caractérisé en ce qu'**une enveloppe conique du mandrin (3) et/ou de la bague de filière (2) présente un profil transversal ondulé (23) qui configure le flux de matière fondue et **en ce qu'**un mouvement de sortie effectué par le mandrin (3) et/ou la bague de filière (2) et augmentant la largeur de fente renforce simultanément le profil de la fente alors qu'un mouvement de retrait du mandrin (3) et/ou de la bague de filière (2), lequel réduit la largeur de fente, en atténue simultanément le profil.

12. Procédé selon la revendication 11 **caractérisé en ce que** l'enveloppe conique pourvue d'un profil transversal ondulé délimite la fente (4) et **en ce que** la profondeur (HP) du profil ondulé (23) se réduit en direction de la sortie de filière, dans le sens d'écoulement de la matière fondue.

13. Procédé selon l'une des revendications 1 à 4 **caractérisé en ce que** le mandrin (3) et/ou la bague de filière (2) sont équipés d'une gaine élastique (6) qui présente une section conique vers la sortie de filière et que des éléments de réglage (7) disposés essentiellement dans le sens radial peuvent déformer, l'enveloppe conique de la gaine (6) est pourvue d'un profil transversal ondulé (23) configurant le flux de matière fondue, la profondeur du profil (23) incorporé dans la gaine se réduisant vers la sortie de filière, et **en ce qu'**un mouvement de sortie effectué par le mandrin (3) gainé ou la bague de filière (2) gainée et augmentant la largeur de fente accentue simultanément le profil de la fente alors qu'un mouvement de retrait du mandrin (3) ou de la bague de filière (2), lequel réduit la largeur de fente, en atténue le profil.

14. Procédé selon l'une des revendications 1 à 13 **caractérisé en ce qu'**en amont de l'enveloppe conique dans laquelle est pratiqué le profil, la paroi du conduit à matière fondue présente dans le sens d'écoulement des cavités d'entrée qui favorisent l'écoulement de la matière fondue vers les évidements du profil pratiqué sur la surface conique de la paroi.

15. Procédé selon l'une des revendications 11 à 14 **caractérisé en ce que** la profondeur du profil dans le sens d'écoulement se réduit en direction de la sortie de filière dans des proportions faisant que la fente peut être fermée dans une position finale sous l'effet d'un mouvement de réglage axial du mandrin (3) ou de la bague de filière (2).
